# EUROPEAN PATENT SPECIFICATION

(11) **EP 3 321 732 B1**
(45) Date of publication and mention of the grant of the patent: **26.05.2021**
(21) Application number: 16820743.9
(22) Date of filing: 22.06.2016
(51) Int. Cl.: G03B 21/00, G03B 21/13, G03B 21/10, H04N 9/73, G03B 21/20

(54) **FUSION AND DISPLAY SYSTEM**
FUSIONS- UND ANZEIGESYSTEM
SYSTÈME DE FUSION ET D'AFFICHAGE

(30) Priority: 07.07.2015 CN 201510402340
(43) Date of publication of application: 16.05.2018
(73) Proprietor: Yutou Technology (Hangzhou) Co., Ltd., Hangzhou, Zhejiang 310000 (CN)
(72) Inventor: DU, Gangying, Hangzhou Zhejiang 310000 (CN); LIANG, Ningqing, Hangzhou Zhejiang 310000 (CN)
(74) Representative: Kutzenberger Wolff & Partner
(86) International application number: PCT/CN2016/086792
(87) International publication number: WO 2017/005092

(56) References cited:
- WO-A2-2007/026283
- CN-A- 102 265 620
- CN-A- 103 477 640
- CN-A- 104 062 763
- CN-B- 103 229 091
- CN-U- 203 595 885
- GB-A- 2 518 461
- JP-A- 2012 186 118
- US-A1- 2006 209 404

## Description

### TECHNICAL FIELD

The invention relates to the field of display, more specifically, to a fusion and display system for a cutover between illumination and display.

### BACKGROUND

The present projection technique mainly focuses on projecting the light after the image signal is processed. And the projector can display the fine image presentation. However, the present projection technique can only project the image on the projection screen. It cannot display atmosphere light in the entire environmental space while projecting the image, or in the display system with an atmosphere light device, the display part and the light are processed separately, rather than processed by fusion. Therefore, the present projection technique cannot reinforce the visual effect of the images, and provide a better visual experience to users.

Document GB 2 518 461 A discloses a portable seamless display screen. Document US 2006 / 209 404 A1 discloses a light-diffusing sheet for use in a backlight unit of a TFT-LCD, in which organic or inorganic particles are contained in a base sheet and voids are formed around these particles. Document JP 2012 186 118 A discloses an illumination device with a projection device for different illumination scenes comprising different light colors.

### SUMMARY OF THE INVENTION

For the deficiencies of the present projection technique, the invention provides a fusion and display system for displaying the image while projecting atmosphere light in the entire environmental space.

The solution is as follows:
A fusion and display system, comprising:
a structure positioning plate (6);
a screen (5) fixed on the structure positioning plate (6);
a projection unit (2) arranged on the structure positioning plate (6), for projecting an image light to a back of the screen (5);
a lighting unit (3) arranged on the structure positioning plate (6), for projecting light rays to the back of the screen (5), the lighting unit (3) comprises LED light sets, the LED light sets are arranged on a base (4), the base (4) is fixed on a structure positioning plate (6), a round hole is arranged in the middle of the base (4) so as to let the projected light pass through; the light projected by the projection unit (2) is located inside the light projected by the lighting unit (3);
a control unit (1) respectively connected to the projection unit (2) and the lighting unit (3), for receiving an input signal and parsing the input signal to control the projected image of the projection unit (2) and working states of the lighting unit (3);
wherein, the screen (5) comprises a single curved surface, the incident image light and light rays ingress through one concave surface of the screen (5), are transmitted by the screen (5), and form parallel rays and are emitted out from the convex surface of the screen (5), and the light transmittance of the screen is between 40% to 70%.

Preferably, the screen (5) is made from polymethyl methacrylate and silicon dioxide.

Preferably, the input signal comprises a light signal and/or a projection signal, the input signal is split by the control unit (1), to obtain the light signal and/or the projection signal;
when the input signal is the light signal, the control unit (1) transmits the light signal to the light unit (3);
when the input signal is the projection signal, the control unit (1) transmits the projection signal to the projection unit (2);
when the input signal is the light signal and the projection signal, the control unit (1), on the basis of the synchronization logic relationship of the signal, transmits the light signal to the light unit (3) and transmits the projection signal to the projection unit (2).

Preferably, the projection unit comprises a digital light procession device.

The beneficial effect of the solution mentioned above is as follows:
In the technical solution, the input signal can be analyzed by the control unit to control the projection image of the projection unit and the working state of the light unit. The screen can fully fuse the image light output by the projection unit and the light rays output by the light unit, and can display atmosphere light in the entire environmental space while projecting the image to reinforce the visual effect of the images, thus providing a better visual experience to users.

### BRIEF DESCRIPTIONS OF THE DRAWINGS

The accompanying drawings, together with the specification, illustrate exemplary embodiments of the present disclosure, and, together with the description, serve to explain the principles of the present invention.
Figure 1 is a module diagram of the fusion and display system according to an embodiment of the invention;
Figure 2 is a structure diagram of the fusion and display system according to an embodiment of the invention;
Figure 3 is a side view of the structure of the fusion and display system.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

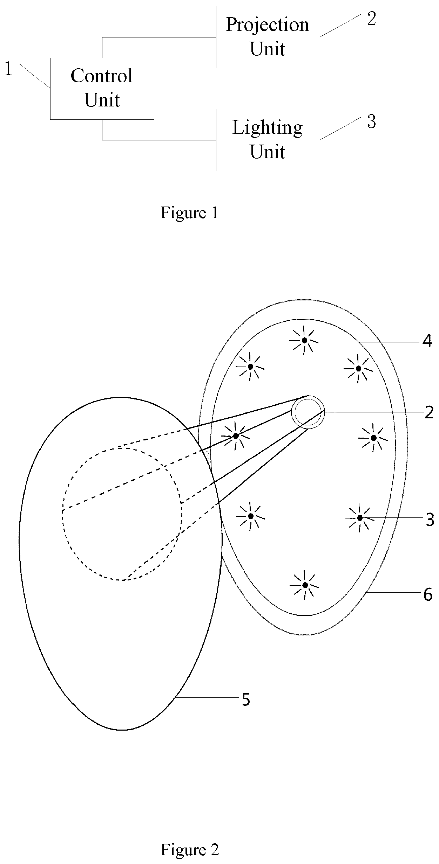

As shown in Figures 1 to 3, a fusion and display system, comprising:
a structure positioning plate 6;
a screen 5 fixed on the structure positioning plate 6;
a projection unit 2 arranged on the structure positioning plate 6, for projecting an image light to a back of the screen 5;
a lighting unit 3 arranged on the structure positioning plate 6, for projecting light rays to the back of the screen 5, the light projected by the projection unit 2 is located inside the light projected by the lighting units 3;
a control unit 1 respectively connected to the projection unit 2 and the lighting unit 3, for receiving an input signal and parsing the input signal to control the projected image of the projection unit 2 and the working states of the lighting units 3;
wherein the incident image light and/or light rays ingress through one surface of the screen 5, are transmitted by the screen 5, and form parallel rays and are emitted out from the other surface of the screen 5, and the light transmittance of the screen 5 is between 40% to 70%.

Further, the light transmittance of the screen is varied according to the characters of the lighting units 3 and the projection unit 2, and it is optimal when the light transmittance of the screen 5 is 60%.

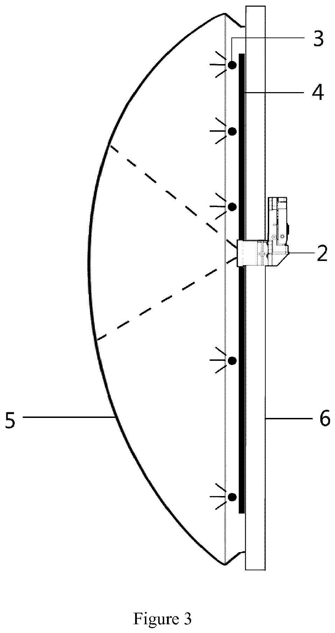

As shown in Figure 2 and 3, when the fusion and display system is installed, the LED light sets are arranged on the base 4, then the base 4 is fixed on the structure positioning plate 6, a round hole is arranged in the middle of the base 4 so as to let the projected light pass through. The lighting unit 3 is located on the outer of the projection unit 2 so as to project the light rays to the back of the screen 5.

In the embodiment, the input signal can be analysed via the control unit 1, to control the projected image of the projection unit 2 and the working states of the lighting units 3. The screen 5 can fully fuse the image light output by the projection unit 2 and the light rays output by the light unit 3, and can display atmosphere light in the entire environmental space while projecting the image to reinforce the visual effect of the images, thus providing a better visual experience to users.

In a comparative example not forming part of the invention, the screen 5 is flat.

As shown in Figures 2 and 3, in the embodiment of the invention, the screen comprises a single curved surface, incident image light and/or light rays ingress through a concave surface of the screen 5, are transmitted by the screen, and form the parallel rays and are emitted out from a convex surface of the screen 5.

In a comparative example not forming part of the invention, the screen 5 with a double curved surface can render a sense of depth of the projected image, so as to improve the feeling of the viewer.

According to the invention, the projection unit 2 is arranged on the structure positioning plate 6, the lighting unit 3 comprises LED light sets arranged on the outer of the projection unit.

When the LED light sets are installed, the LED light sets are arranged on the base 4, the base 4 is fixed on the structure positioning plate 6. Then the projection unit 2 is fixed on the structure positioning plate 6. The projection unit 2 can, upon the requirement, be arranged on the lower or middle or upper part of the structure positioning plate 6, to display the projection content.

In the embodiment, the LED light sets can be made of LED beads which can illuminate red, green and blue (RGB) light, each LED light set can illuminate 160 million colors according to the light signal. LED is called the fourth generation of light source, with the advantages of energy saving, environmental protection, low power consumption, high brightness, colorful, good stability and dynamic change speed.

In a preferred embodiment, the screen 5 is made from polymethyl methacrylate and silicon dioxide.

In the embodiment, when manufacturing the screen 5, a certain soft light component (silica) should be added into the polymethyl methacrylate rather than be sprayed on the surface. And the formed screen 5 is an integral plate instead of jointing by various materials. During the manufacturing of the screen, the light transmittance and the soft light status need to be adjusted and tested continuously, so as to fully fuse the image light output by the projection unit 2 and the light rays output by the light unit 3, thus providing a better visual experience to users.

Further, when the projection unit 2 operates alone, the content displayed on the screen 5 can keep high brightness and high fineness; when the lighting unit 3 operates alone, the light displayed on the screen 5 can keep evenness and gentleness, so that the issue that one signal pixel is too bright is avoided.

In a preferred embodiment, the input signal comprises a light signal and/or a projection signal, the input signal is split by the control unit 1, to obtain the light signal and/or the projection signal:
when the input signal is the light signal, the control unit 1 transmits the light signal to the light unit 3;
when the input signal is the projection signal, the control unit 1 transmits the projection signal to the projection unit 2;
when the input signal is the light signal and the projection signal, the control unit 1, on the basis of the synchronization logic relationship of the signal, transmits the light signal to the light unit 3 and transmits the projection signal to the projection unit 2.

In the embodiment, the input signal can comprise a light signal and/or a projection signal, the input signal is split via the control unit 1, to obtain the split light signal and/or projection signal. On the basis of the synchronization logic of the signal, the light signal is transmitted to the light unit 3 and the projection signal is transmitted to the projection unit 2. That is, in a time period, only the present projection signal frame and the corresponding LED signal are transmitted to the corresponding device, to execute a corresponding operation. Then in a next frame, refresh the input signals of both two.

In a preferred embodiment, the projection unit comprises a digital light procession (DLP) device.

In the embodiment, DLP technology is used to digitally process the image signal and project the light, therefore the fine content can be displayed.

The fusion and display system, during the operation, can function as the projection screen 5 of the DLP device alone, to display the projection content clearly, and to keep the high brightness; it can also function as the LED soft light screen, to make the light of the LED array on the back of the screen 5 be distributed on the screen 5 evenly; it can also be used when the DLP device and the LED light sets operate at the same time. Although there is LED backlight in the DLP projection area, the characters of the material and structure of the screen 5 make the definition of the rendered content not be affected. The LED light can switch over the color, brightness and rhythmic to fit the content of the projection area on the basis of the signal output by the control unit 1, to fuse the light and color, and to fuse the content of the projection and the subject of the light.

Further, based on above solution, letting the hemispheric curved surface function as the screen 5, the LED light sets and the DLP device are all at the inner of the sphere. When the LED light sets operate alone, the hemispheric curved surface can be treated as a light source, varying the color can be used for illumination or rendering the environment; when the LED light sets operate together with the DLP device, the DLP projects on the inner wall of the spherical curved surface, to show the fusion effect. For example, when the DLP projects several words and the LED illuminates a plurality of lights with different colors, the light output by the LED light sets becomes the background of the text and renders the effect that the clear text and the light output by the LED light sets displays on the same surface rather than the effect that the text floats on the surface. When the DLP device projects an image like a sun in the evening, the LED light sets output light like a warm light in the evening glow, so that the whole scene is unitive and the sunset is rendered. When the DLP device displays a waveform signal, the LED light sets can vary the color upon the frequency transformation of the waveform, so that the screen 5 renders the harmonious effect, and the frequency characters are shown to the viewer intuitively. When the DLP device displays the standby interface, the LED light sets can operate at a breath mode, so that the screen 5 shows a life force for the standby mode. The invention is defined by the claims.

## Claims

1. A fusion and display system, comprising:
a structure positioning plate (6);
a screen (5) fixed on the structure positioning plate (6);
a projection unit (2) arranged on the structure positioning plate (6), for projecting an image light to a back of the screen (5);
a lighting unit (3) arranged on the structure positioning plate (6), for projecting light rays to the back of the screen (5), the lighting unit (3) comprises LED light sets, the LED light sets are arranged on a base (4), the base (4) is fixed on a structure positioning plate (6), a round hole is arranged in the middle of the base (4) so as to let the projected light pass through; the light projected by the projection unit (2) is located inside the light projected by the lighting unit (3);
a control unit (1) respectively connected to the projection unit (2) and the lighting unit (3), for receiving an input signal and parsing the input signal to control projected image of the projection unit (2) and working states of the lighting unit (3);
wherein, the screen (5) comprises a single curved surface, the incident image light and light rays ingress through one concave surface of the screen (5), are transmitted by the screen (5), and form parallel rays and are emitted out from the convex surface of the screen (5), and the light transmittance of the screen is between 40% to 70%.

2. The fusion and display system according to claim 1, wherein the screen (5) is made from polymethyl methacrylate and silicon dioxide.

3. The fusion and display system according to claim 1, wherein the input signal comprises a light signal and/or a projection signal, the input signal is split by the control unit(1), to obtain the light signal and/or the projection signal;
when the input signal is the light signal, the control unit (1) transmits the light signal to the light unit (3);
when the input signal is the projection signal, the control unit (1) transmits the projection signal to the projection unit (2);
when the input signal is the light signal and the projection signal, the control unit (1), on the basis of the synchronization logic relationship of the signal, transmits the light signal to the light unit (3) and transmits the projection signal to the projection unit (2).

## Patentansprüche

1. Fusions- und Anzeigesystem, das Folgendes umfasst:
eine Strukturanordnungsplatte (6);
einen Bildschirm (5), der auf der Strukturanordnungsplatte (6) befestigt ist;
eine Projektionseinheit (2), die auf der Strukturanordnungsplatte (6) angeordnet ist, um Bildlicht auf eine Rückseite des Bildschirms (5) zu projizieren;
eine Beleuchtungseinheit (3), die auf der Strukturanordnungsplatte (6) angeordnet ist, um Lichtstrahlen auf die Rückseite des Bildschirms (5) zu projizieren, wobei die Beleuchtungseinheit (3) LED-Lichtgruppen umfasst, wobei die LED-Lichtgruppen auf einem Sockel (4) angeordnet sind, der Sockel (4) auf einer Strukturanordnungsplatte (6) befestigt ist und ein rundes Loch in der Mitte des Sockels (4) angeordnet ist, um das projizierte Licht hindurchtreten zu lassen; wobei das Licht, das durch die Projektionseinheit (2) projiziert wird, innerhalb des Lichts angeordnet ist, das durch die Beleuchtungseinheit (3) projiziert wird;
eine Steuereinheit (1), die zum Empfangen eines Eingangssignals und Analysieren des Eingangssignals, um das projizierte Bild der Projektionseinheit (2) und die Arbeitszustände der Beleuchtungseinheit (3) zu steuern, jeweils mit der Projektionseinheit (2) und der Beleuchtungseinheit (3) verbunden ist;
wobei der Bildschirm (5) eine einzige gekrümmte Fläche umfasst, das einfallende Bildlicht und die Lichtstrahlen durch eine konkave Oberfläche des Bildschirms (5) eindringen, durch den Bildschirm (5) übertragen werden und parallele Strahlen bilden und aus der konvexen Oberfläche des Bildschirms (5) emittiert werden und der Lichtdurchlässigkeitsgrad des Bildschirms im Bereich von 40 % bis 70 % liegt.

2. Fusions- und Anzeigesystem nach Anspruch 1, wobei der Bildschirm (5) aus Polymethyl-Methacrylat und Siliziumdioxid hergestellt ist.

3. Fusions- und Anzeigesystem nach Anspruch 1, wobei das Eingangssignal ein Lichtsignal und/oder ein Projektionssignal umfasst, wobei das Eingangssignal durch die Steuereinheit (1) geteilt wird, um das Lichtsignal und/oder das Projektionssignal zu erhalten;
wobei
dann, wenn das Eingangssignal das Lichtsignal ist, die Steuereinheit (1) das Lichtsignal an die Lichteinheit (3) überträgt;
dann, wenn das Eingangssignal das Projektionssignal ist, die Steuereinheit (1) das Projektionssignal an die Projektionseinheit (2) überträgt; und
dann, wenn das Eingangssignal das Lichtsignal und das Projektionssignal ist, die Steuereinheit (1) auf der Grundlage der Synchronisationslogikbeziehung des Signals das Lichtsignal an die Lichteinheit (3) überträgt und das Projektionssignal an die Projektionseinheit (2) überträgt.

## Revendications

1. Système de fusion et d'affichage, comprenant :
une plaque (6) de positionnement de structure ;
un écran (5) fixé sur la plaque (6) de positionnement de structure ;
une unité de projection (2) agencée sur la plaque (6) de positionnement de structure, destinée à projeter une lumière d'image sur un dos de l'écran (5) ;
une unité d'éclairage (3) agencée sur la plaque (6) de positionnement de structure, destinée à projeter des rayons lumineux sur le dos de l'écran (5), l'unité d'éclairage (3) comprenant des ensembles lumineux à LED, les ensembles lumineux à LED étant agencés sur un socle (4), le socle (4) étant fixé sur une plaque (6) de positionnement de structure, un trou rond étant pratiqué au milieu du socle (4) de manière à y laisser passer la lumière projetée ; la lumière projetée par l'unité de projection (2) se situant à l'intérieur de la lumière projetée par l'unité d'éclairage (3) ;
une unité de commande (1) reliée respectivement à l'unité de projection (2) et à l'unité d'éclairage (3), destinée à recevoir un signal d'entrée et à réaliser une analyse syntaxique du signal d'entrée pour commander l'image projetée de l'unité de projection (2) et des états de fonctionnement de l'unité d'éclairage (3) ;
l'écran (5) comprenant une seule surface incurvée, la lumière d'image et les rayons lumineux incidents entrant à travers une surface concave de l'écran (5), étant transmis par l'écran (5) et formant des rayons parallèles et étant émis hors de la surface convexe de l'écran (5), et le facteur de transmission lumineuse de l'écran étant compris entre 40 % et 70 %.

2. Système de fusion et d'affichage selon la revendication 1, dans lequel l'écran (5) est constitué de poly(méthacrylate de méthyle) et de dioxyde de silicium.

3. Système de fusion et d'affichage selon la revendication 1, dans lequel le signal d'entrée comprend un signal lumineux et/ou un signal de projection, le signal d'entrée est décomposé par l'unité de commande (1) pour obtenir le signal lumineux et/ou le signal de projection ;
lorsque le signal d'entrée est le signal lumineux, l'unité de commande (1) transmet le signal lumineux à l'unité lumineuse (3) ;
lorsque le signal d'entrée est le signal de projection, l'unité de commande (1) transmet le signal de projection à l'unité de projection (2) ;
lorsque le signal d'entrée est le signal lumineux et le signal de projection, l'unité de commande (1), en fonction de la relation de logique de synchronisation du signal, transmet le signal lumineux à l'unité lumineuse (3) et transmet le signal de projection à l'unité de projection (2) .
